(19) Europäisches Patentamt
European Patent Office
Office européen des brevets

(11) EP 4 700 869 A1

(12) **EUROPEAN PATENT APPLICATION**

(43) Date of publication:
**25.02.2026 Bulletin 2026/09**

(21) Application number: **25197631.2**

(22) Date of filing: **22.08.2025**

(51) International Patent Classification (IPC):
***H01M 4/62*** *(2006.01)* ***C08F 220/06*** *(2006.01)*
***C08F 220/14*** *(2006.01)* ***C08F 220/44*** *(2006.01)*
***C08F 212/08*** *(2006.01)*

(52) Cooperative Patent Classification (CPC):
**H01M 4/622; C08F 212/08; C08F 220/06; C08F 220/14; C08F 220/44**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **22.08.2024 KR 20240112985**
**21.08.2025 KR 20250116504**

(71) Applicant: **SAMSUNG SDI CO., LTD.**
**Yongin-si, Gyeonggi-do 17084 (KR)**

(72) Inventors:
- **LEE, Kukjoo**
  **17084 Yongin-si, Gyeonggi-do (KR)**
- **CHO, Yunshik**
  **17084 Yongin-si, Gyeonggi-do (KR)**
- **CHOI, Jewon**
  **17084 Yongin-si, Gyeonggi-do (KR)**
- **PARK, Sujin**
  **17084 Yongin-si, Gyeonggi-do (KR)**
- **CHO, Minho**
  **17084 Yongin-si, Gyeonggi-do (KR)**
- **JUNG, Kyunghwa**
  **17084 Yongin-si, Gyeonggi-do (KR)**

(74) Representative: **Michalski Hüttermann & Partner Patentanwälte mbB**
**Kaistraße 16A**
**40221 Düsseldorf (DE)**

# (54) BINDER FOR LITHIUM RECHARGEABLE BATTERY, ELECTRODE INCLUDING THE SAME, AND LITHIUM RECHARGEABLE BATTERY INCLUDING THE SAME

(57) Examples of the disclosure include a binder for a rechargeable lithium battery, and an electrode and a rechargeable lithium battery including the binder, the binder including a core-shell structured particle-shaped binder and a linear binder, wherein at least one of the core-shell structured particle-shaped binder and the linear binder includes a desired structural unit.

FIG. 1

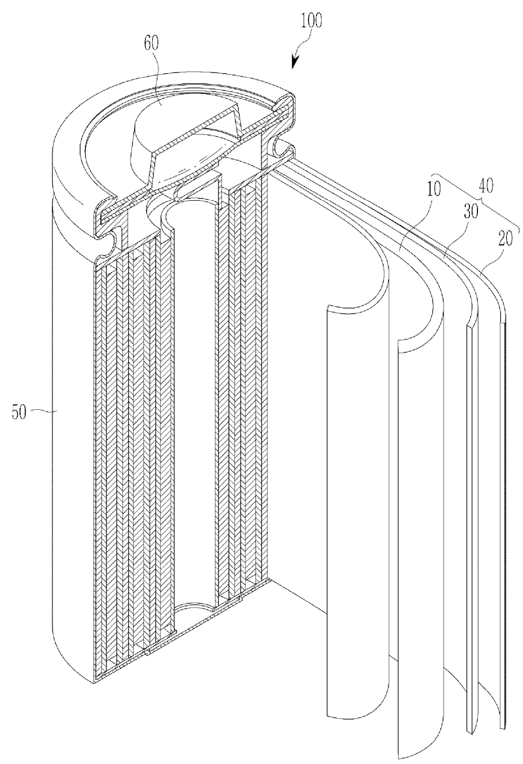


EP 4 700 869 A1

## Description

## BACKGROUND

### 1. Field

A binder for a rechargeable lithium battery, and an electrode and a rechargeable lithium battery including the binder are disclosed.

### 2. Description of the Related Art

With increasing use of electronic devices that use batteries, such as, e.g., mobile phones, laptop computers, electric vehicles, and the like, the demand for small, lightweight, and relatively high-capacity rechargeable batteries is increasing. In particular, rechargeable lithium batteries are attracting attention as a power source for portable devices because rechargeable lithium batteries are lightweight and have a high energy density.

Rechargeable lithium batteries include a positive electrode and a negative electrode including an active material capable of intercalating and deintercalating lithium ions, and an electrolyte solution, and electrical energy is produced through oxidation and reduction reactions when lithium ions are intercalated and deintercalated from the positive electrode and negative electrode.

Binders are included in various components of these rechargeable lithium batteries. The above binder may advantageously have high adhesive strength, but binders with high adhesive strength generally have the disadvantage of high resistance.

## SUMMARY

Some example embodiments include a binder for a rechargeable lithium battery having high adhesive strength and low resistance.

Some example embodiments include a binder for a rechargeable lithium battery, including a core-shell structured particle-shaped binder and a linear binder, wherein each, or at least one, of the core-shell structured particle-shaped binder and the linear binder includes a desired structural unit.

Some example embodiments include a negative electrode including the binder for a rechargeable lithium battery.

Some example embodiments include a rechargeable lithium battery including the negative electrode, a positive electrode, and an electrolyte.

The binder for a rechargeable lithium battery of some example embodiments has high adhesive strength and low resistance, and thus can contribute to improving the performance of a rechargeable lithium battery.

## BRIEF DESCRIPTION OF THE DRAWINGS

FIGS. 1 to 4 are views schematically illustrating a rechargeable lithium battery, according to some example embodiments.

## DETAILED DESCRIPTION

Hereinafter, example embodiments of the present disclosure are described in detail below. However, these embodiments are examples, the present disclosure is not limited thereto and the present disclosure is defined by the scope of claims.

As used herein, when specific definition is not otherwise provided, it is understood that when an element such as a layer, film, region, or substrate is referred to as being "on" another element, it may be directly on the other element or intervening elements may also be present.

As used herein, when specific definition is not otherwise provided, the singular may also include the plural. In addition, unless otherwise specified, "A or B" may mean "including A, including B, or including A and B."

As used herein, "combination thereof" may mean a mixture, a stack, a composite, a copolymer, an alloy, a blend, or a reaction product of constituents.

As used herein, when a definition is not otherwise provided, a particle diameter may be an average particle diameter. This average particle diameter means an average particle diameter (D50), which is a diameter of particles with a cumulative volume of 50 volume% in the particle size distribution. The average particle diameter (D50) can be measured by methods well known to those skilled in the art, for example, by measuring with a particle size analyzer, a transmission electron microscope or scanning electron microscope. Alternatively, a dynamic light-scattering measurement device is

used to perform a data analysis, and the number of particles is counted for each particle size range. From this, the average particle diameter (D50) value may be readily obtained through a calculation. A laser diffraction method may also be used. When measuring by laser diffraction, more specifically, the particles to be measured are dispersed in a dispersion medium and then introduced into a commercially available laser diffraction particle size measuring device (e.g., MT 3000 available from Microtrac, Ltd.) using ultrasonic waves at about 28 kHz, and after irradiation with an output of 60 W, the average particle diameter (D50) based on 50% of the particle size distribution in the measuring device can be calculated.

As used herein, when a specific definition is not otherwise provided, "alkyl group" refers to a C1 to C20 alkyl group, "alkenyl group" refers to a C2 to C20 alkenyl group, "cycloalkenyl group" refers to a C3 to C20 cycloalkenyl group, "heterocycloalkenyl group" refers to a C3 to C20 heterocycloalkenyl group, "aryl group" refers to a C6 to C20 aryl group, "arylalkyl group" refers to a C6 to C20 arylalkyl group, "alkylene group" refers to a C1 to C20 alkylene group, "arylene group" refers to a C6 to C20 arylene group, "alkylarylene group" refers to a C6 to C20 alkylarylene group, "heteroarylene group" refers to a C3 to C20 heteroarylene group, and "alkoxylene group" refers to a C1 to C20 alkoxylene group.

As used herein, when a specific definition is not otherwise provided, "substituted" refers to replacement of at least one hydrogen atom by a substituent such as or including at least one of a halogen atom (F, Cl, Br, or I), a hydroxy group, a C1 to C20 alkoxy group, a nitro group, a cyano group, an amine group, an imino group, an azido group, an amidino group, a hydrazino group, a hydrazono group, a carbonyl group, a carbamyl group, a thiol group, an ester group, an ether group, a carboxyl group or a salt thereof, a sulfonic acid group or a salt thereof, a phosphoric acid group or a salt thereof, a C1 to C20 alkyl group, a C2 to C20 alkenyl group, a C2 to C20 alkynyl group, a C6 to C20 aryl group, a C3 to C20 cycloalkyl group, a C3 to C20 cycloalkenyl group, a C3 to C20 cycloalkynyl group, a C2 to C20 heterocycloalkyl group, a C2 to C20 heterocycloalkenyl group, a C2 to C20 heterocycloalkynyl group, a C3 to C20 heteroaryl group, and a combination thereof.

Additionally, as used herein, when a specific definition is not otherwise provided, "hetero" means that the chemical formula contains at least one hetero atom of at least one of N, O, S, and P.

Additionally, as used herein, when a specific definition is not otherwise provided, "(meth)acrylate" means both "acrylate" and "methacrylate," and "(meth)acrylic acid" means both "acrylic acid" and "methacrylic acid".

As used herein, when a specific definition is not otherwise provided, "combination" refers to mixing or copolymerization.

In chemical formulas of the present specification, when a specific definition is not otherwise provided, hydrogen is bonded at the position when a chemical bond is not drawn where supposed to be given.

In this specification, the weight average molecular weight (Mw) may be a value measured using gel permeation chromatography (GPC).

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

**Binder:**

Some example embodiments include a binder for a rechargeable lithium battery, the binder including a core-shell structured particle-shaped binder and a linear binder, wherein each, or at least one, of the core-shell structured particle-shaped binder and the linear binder includes a desired structural unit. The core-shell binder may refer a particle-shaped binder comprising a spherical core particle composed of a polymer and a shell composed of a polymer that surrounds the surface of the core particle. The linear binder may refer a linear polymer. A linear polymer is a type of polymer where monomer units are linked together in a long, continuous chain, resembling a straight line. This structure is in contrast to branched or cross-linked polymers.

The particle-shaped binder is composed of a core-shell structure, and each, or at least one, of the core and the shell may include an acrylic polymer. Such a core-shell structured particle-shaped binder may exhibit low resistance by including functional groups that are friendly to electrolyte solutions compared to a SBR (styrene-butadiene rubber) binder, but may have a disadvantage of insufficient adhesive strength for use in rechargeable lithium batteries.

The linear binder has a high adhesive strength that can compensate for the shortcomings of the core-shell structured particle-shaped binder, and also has the advantage of desired or improved ionic conductivity and low resistance.

Therefore, the binder of some example embodiment including the core-shell structured particle-shaped binder and linear binder simultaneously or contemporaneously has high adhesive strength and low resistance, and thus may contribute to improving the performance of a rechargeable lithium battery.

Hereinafter, a binder for a rechargeable lithium battery according to some example embodiments is described in detail.

Particle-shaped Binder

The core of the core-shell structured particle-shaped binder may include a first structural unit derived from a (C1-C20) alkyl or (C2-C20) alkenyl (meth)acrylate monomer, e.g., a (C1-C10) alkyl (meth)acrylate monomer, a second structural unit derived from an aromatic vinyl monomer, and a third structural unit derived from a di(meth)acrylate monomer. These structural units are monomers which are used for co-polymerization.

The first structural unit may be represented by Chemical Formula 1:

Chemical Formula 1:

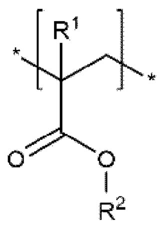

In Chemical Formula 1, $R^1$ may be or include a hydrogen atom or a C1 to C20 alkyl group; and $R^2$ may be or include a substituted or unsubstituted C1 to C20 alkyl group, or a substituted or unsubstituted C2 to C20 alkenyl group.

For example, the first structural unit may be derived from 2-ethylhexyl acrylate. In this case, $R^1$ may be or include a hydrogen atom, and $R^2$ may be or include a 2-ethylhexyl group.

The second structural unit may be represented by Chemical Formula 2:

Chemical Formula 2:

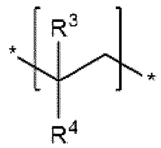

In Chemical Formula 2, $R^3$ may be or include a hydrogen atom, or a C1 to C20 alkyl group; and $R^4$ may be or include a substituted or unsubstituted C6 to C20 aryl group.

For example, the second structural unit may be derived from styrene. In this case, $R^3$ may be or include a hydrogen atom, and $R^4$ may be or include a phenyl group.

The third structural unit may be represented by Chemical Formula 3:

Chemical Formula 3:

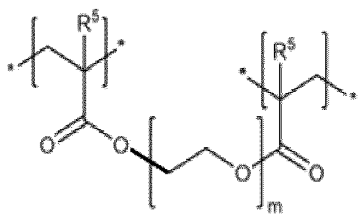

In Chemical Formula 3, $R^5$ may be the same or different and may independently be or include a hydrogen atom, or a C1 to C20 alkyl group; and m may be an integer in a range of 1 to 100.

For example, the third structural unit may be derived from diacrylate. In this case, all of $R^5$ may be hydrogen atoms, and m may be 1 or 2.

Based on 100 wt% of a total amount of the core, the first structural unit may be included in an amount in a range of ≥ 35 to ≤ 60 wt%, ≥ 38 to ≤ 55 wt%, or ≥ 40 to ≤ 58 wt%; the second structural unit may be included in an amount in a range of ≥ 35 to ≤ 60 wt%, ≥ 38 to ≤ 55 wt%, or ≥ 40 to ≤ 58 wt%; and the third structural unit may be included in an amount in a range of ≥ 0.01 to ≤ 5 wt%, ≥ 0.1 to ≤ 5 wt%, or ≥ 0.3 to ≤ 2 wt%.

Within any of the above ranges, the first to third structural units are in harmony, so that low resistance may be

exhibited.

The shell of the core-shell structured particle-shaped binder may include a fourth structural unit derived from a (meth)acrylic acid-based monomer or a salt thereof, a fifth structural unit derived from a (meth)acrylonitrile-based monomer, and a sixth structural unit derived from an aromatic vinyl sulfonate-based monomer or a salt thereof. These structural units are monomers which are used for co-polymerization.

The fourth structural unit may be represented by Chemical Formula 4-1 or 4-2:

Chemical Formula 4-1:

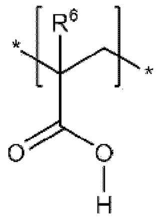

Chemical Formula 4-2:

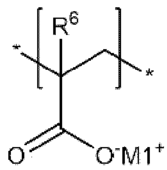

In Chemical Formulas 4-1 and 4-2, $R^6$ may be the same or different and may independently be or include a hydrogen atom or a C1 to C20 alkyl group, and M1 may be an alkali metal.

For example, the fourth structural unit can be derived from acrylic acid. In this case, $R^6$ may all be or include hydrogen atoms.

M1 may be derived from a metal ion in the electrolyte solution, for example, a lithium atom.

The fifth structural unit may be represented by Chemical Formula 5:

Chemical Formula 5:

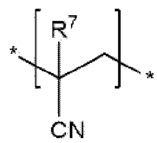

In Chemical Formula 5, $R^7$ may be or include a hydrogen atom or a C1 to C20 alkyl group.

For example, the fifth structural unit may be derived from acrylonitrile. In this case, $R^7$ may be or include a hydrogen atom.

The sixth structural unit may be represented by Chemical Formula 6-1 or 6-2:

Chemical Formula 6-1:

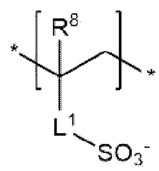

Chemical Formula 6-2:

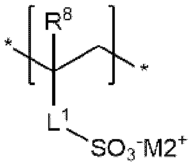

In Chemical Formulas 6-1 and 6-2, $R^8$ may be the same or different and may independently be or include a hydrogen atom or a C1 to C20 alkyl group; $L^1$ may be the same or different and may independently be or include a substituted or unsubstituted C6 to C20 arylene group; and M2 may be or include an alkali metal.

For example, the sixth structural unit may be derived from sodium styrene sulfonate. In this case, $R^8$ may be or include a hydrogen atom and $L^1$ may be or include a phenylene group.

M2 may be derived from a metal ion in the electrolyte solution, for example, a lithium atom.

Based on 100 wt% of a total amount of the shell, the fourth structural unit may be included in an amount in a range of ≥ 25 to ≤ 60 wt%, ≥ 30 to ≤ 60 wt%, or ≥ 35 to ≤ 55 wt%; the fifth structural unit may be included in an amount in a range of ≥ 25 to ≤ 47 wt%, ≥ 28 to ≤ 47 wt%, or ≥ 30 to ≤ 45 wt%; and the sixth structural unit may be included in an amount in a range of ≥ 3 to ≤ 35 wt%, ≥ 5 to ≤ 35 wt%, or ≥ 10 to ≤ 30 wt%.

In the above ranges, the fourth to sixth structural units are in harmony, so that low resistance may be exhibited.

A weight ratio of the core and the shell in the core-shell structured particle-shaped binder may be in a range of ≥ 100:0.1 to ≤ 100:20, ≥ 100:0.5 to ≤ 100:10, or ≥ 100:1 to ≤ 100:5.

Within the above ranges, the core and the harmony can exhibit low resistance.

The core-shell structured particle-shaped binder may be located at the basal portion of the electrode active material layer, and the trade-off relationship between adhesive strength and resistance can be controlled by adjusting the particle size during manufacturing.

For example, an average particle diameter (D50) of the core-shell structured particle-shaped binder may be in a range 450 nm to 1500 nm, of ≥ 450 nm to ≤ 700 nm. This is larger than the average particle diameter (D50) of ≥ 2 nm to ≤ 300 nm of commonly used particle-shaped binders, and can exhibit low resistance.

The core-shell structured particle-shaped binder may have a weight average molecular weight (Mw) in a range of ≥ 20,000 g/mol to ≤ 2,500,000 g/mol, for example, ≥ 50,000 g/mol to ≤ 1,500,000 g/mol.

The above range may be suitable for application to an electrode active material layer. Here, the weight average molecular weight may indicate a value calculated in polystyrene conversion by gel permeation chromatography.

<u>Linear Binder</u>

The linear binder may include a seventh structural unit derived from a (meth)acrylic acid-based monomer or a salt thereof, an eighth structural unit derived from a (meth)acrylonitrile-based monomer, and a ninth structural unit derived from a zwitterionic monomer. These structural units are monomers which are used for co-polymerization.

The seventh structural unit may be represented by Chemical Formula 7-1 or 7-2:

Chemical Formula 7-1:

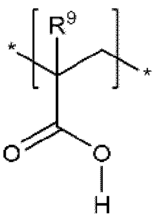

Chemical Formula 7-2:

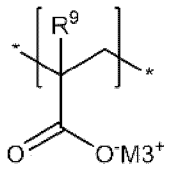

In Chemical Formulas 7-1 and 7-2, $R^9$ may be the same or different and may independently be or include a hydrogen atom, or a C1 to C20 alkyl group; and M3 may be an alkali metal.

For example, the seventh structural unit may be derived from acrylic acid, and all of $R^9$ may be or include hydrogen atoms.

M3 may be derived from a metal ion in the electrolyte solution, for example, a lithium atom.

The eighth structural unit may be represented by Chemical Formula 8:

Chemical Formula 8:

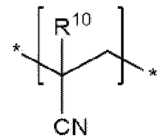

In Chemical Formula 8, $R^{10}$ may be or include a hydrogen atom or a C1 to C20 alkyl group.

The eighth structural unit may be derived from acrylonitrile. In this case, $R^{10}$ may be or include a hydrogen atom.

The ninth structural unit may be represented by Chemical Formula 9-1 or 9-2:

Chemical Formula 9-1:

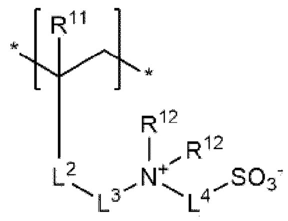

Chemical Formula 9-2:

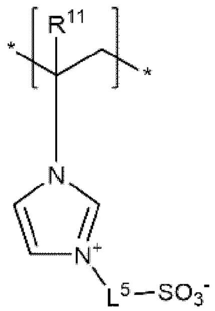

In Chemical Formulas 9-1 and 9-2, $R^{11}$ may be the same or different and may independently be or include a hydrogen atom or a C1 to C20 alkyl group; $R^{12}$ may be the same or different and may independently be or include a hydrogen atom, or a C1 to C20 alkyl group; $L^2$ may be *-(C=O)-NR$^{12}$-CH$_2$-* or *-(C=O)-O-*; and $L^3$ to $L^5$ may independently be or include a single bond, or a C1 to C20 alkylene group.

When the ninth structural unit is derived from sulfobetain (SB) and is represented by Chemical Formula 9-1, $R^{11}$ may be or include a methyl group; $L^2$ may be or include *-(C=O)-NR$^{12}$-CH$_2$-* or *-(C=O)-O-*; and $L^3$ and $L^4$ may both be or include ethylene groups.

When the ninth structural unit is derived from vinylimidazolium sulfonate (IMS) and is represented by Chemical Formula 9-2, $R^{11}$ may be or include a hydrogen atom; and $L^5$ may be or include a butylene group.

Based on 100 wt% of a total amount of the linear binder, the seventh structural unit may be included in an amount in a range of ≥ 30 wt% to ≤ 60 wt%, ≥ 45 wt% to ≤ 60 wt%, or ≥ 45 wt% to ≤ 55 wt%; the eighth structural unit may be included in an amount in a range of ≥ 32 wt% to ≤ 55 wt%, ≥ 35 wt% to ≤ 55 wt%, or ≥ 35 wt% to ≤ 50 wt%; and the ninth structural unit may be included in an amount in a range of ≥ 1 wt% to ≤ 15 wt%, ≥ 3 wt% to ≤ 15 wt%, or ≥ 5 wt% to ≤ 15 wt%.

In the above ranges, the seventh to ninth structural units are in harmony to have a high adhesive strength that may compensate for the shortcomings of the core-shell structured particle-shaped binder, while also having the advantage of desired or improved ionic conductivity and low resistance.

The linear binder may further include a tenth structural unit derived from a (C1-C10) alkylene glycol-based monomer or a salt thereof.

The tenth structural unit may be represented by Chemical Formula 10-1 or 10-2:

Chemical Formula 10-1:

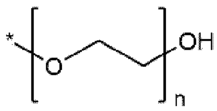

Chemical Formula 10-2:

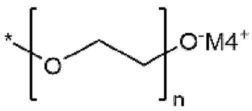

In Chemical Formula 10-1 or 10-2, M4 may be or include an alkali metal, and n may be an integer in a range from 1 to 100.

For example, the tenth structural unit may be derived from ethylene glycol. In this case, n can be between 5 and 20, or between 5 and 10.

M4 may be derived from a metal ion in the electrolyte solution, for example, a lithium atom.

Based on 100 wt% of a total amount of the linear binder, the tenth structural unit may be included in an amount in a range of ≥ 0.1 wt% to ≤ 15 wt%, ≥ 1 wt% to ≤ 15 wt%, or ≥ 3 wt% to ≤ 10 wt%.

In this case, the tenth structural unit may contribute to further reducing resistance by increasing the ionic conductivity of the linear binder.

The linear binder may have a weight average molecular weight (Mw) in a range of ≥ 20,000 g/mol to ≤ 2,500,000 g/mol, for example, ≥ 50,000 g/mol to ≤ 1,500,000 g/mol.

Within the above ranges, the linear binder may be applied to the active material layer. Here, the weight average molecular weight may indicate a value calculated in polystyrene conversion by gel permeation chromatography.

Preparing Method of Each Binder

Each, or at least one, of the binders may be prepared by polymerizing the above monomer mixture by a conventional method known to those skilled in the art.

Among these methods, the core-shell structured particle-shaped binder may be provided by preparing a core including the first to third structural units from the raw material of the core, and mixing the raw material of the shell therein to form a shell including the fourth to sixth structural units on the surface of the core.

The polymerization may be or include at least one of emulsion polymerization, suspension polymerization, solution polymerization, and the like.

The emulsifier may be or include at least one of a higher fatty acid alkali salt, N-acrylamino acid salt, alkyl ether carbonate, acylated peptide, alkyl sulfonate, alkyl benzene sulfonate, alkyl amino acid salt, alkyl naphthalene sulfonate, sulfosuccinate, sulfonated oil, alkyl sulfate, alkyl ether sulfate, alkyl aryl ether sulfate, alkyl amide sulfate, alkyl phosphate, alkyl ethoxyphosphate and alkyl aryl ether phosphate, or a combination thereof. An example of an emulsifier may be or include sodium dodecylbenzene sulfonate. The alkyl group may be or include an alkyl group having 1 to 20 carbon atoms.

The initiator may be or include an azo compound initiator such as or including at least one of azobisisobutyronitrile, ammonium persulfate, potassium persulfate, hydrogen peroxide, t-butyl hydroperoxide, and a combination thereof.

A content of the emulsifier may be in a range of ≥ 0.1 to ≤ 3 parts by weight, or ≥ 0.1 to ≤ 2 parts by weight, based on 100 parts by weight of the total content of the monomer mixture. When the content of the above emulsifier is within the above ranges, the adhesive strength can be further improved, and a binder having a desired size can be obtained so that good dispersion occurs.
A content of the initiator may be in a range of ≥ 0.1 to ≤ 3 parts by weight, or may be ≥ 0.1 to ≤ 2 parts by weight, based on 100 parts by weight of the total content of the monomer mixture.

Mixing Ratio of Core-shell Structured Particle-shaped Binder and Linear Binder

The core-shell structured particle-shaped binder and linear binder may be mixed in a weight ratio in a range of ≥ 100:1 to ≤ 1:1, ≥ 50:1 to ≤ 1:1, or ≥ 8:1: to ≤ 1:1. Within these ranges, the complementary effect of the core-shell structured particle-shaped binder and linear binder can be most desired or improved.

**Electrode**

Some example embodiments include an electrode for a rechargeable lithium battery including the aforementioned binder according to some example embodiments; and an electrode active material.
The electrode may be or include a negative electrode or a positive electrode. The binder has high adhesive strength and low resistance even when included in a negative electrode that undergoes a large volume change due to charge and discharge of a rechargeable lithium battery, and thus can contribute to improving the performance of a rechargeable lithium battery.
Hereinafter, an electrode for a rechargeable lithium battery according to some example embodiments is described in detail.

Negative Electrode Active Material

The negative electrode active material may include at least one of a material that reversibly intercalates/deintercalates lithium ions, a lithium metal, a lithium metal alloy, a material capable of doping/dedoping lithium, and transition metal oxide.
The material that reversibly intercalates/deintercalates lithium ions may include, for example crystalline carbon, amorphous carbon, or a combination thereof as a carbon-based negative electrode active material. The crystalline carbon may be irregular, sheet, flake, spherical, or fiber shaped natural graphite or artificial graphite. The amorphous carbon may be or include at least one of a soft carbon, a hard carbon, a mesophase pitch carbonization product, calcined coke, and the like.
The lithium metal alloy includes an alloy of lithium and a metal such as or including at least one of Na, K, Rb, Cs, Fr, Be, Mg, Ca, Sr, Si, Sb, Pb, In, Zn, Ba, Ra, Ge, Al, and Sn.
The material capable of doping/dedoping lithium may be or include at least one of a Si-based negative electrode active material and a Sn-based negative electrode active material. The Si-based negative electrode active material may include at least one of silicon, a silicon-carbon composite, $SiO_x$ ($0 < x \leq 2$), a Si-Q alloy (wherein Q is an element such as or including at least one of an alkali metal, an alkaline-earth metal, a Group 13 element, a Group 14 element (excluding Si), a Group 15 element, a Group 16 element, a transition metal, a rare earth element, and a combination thereof), or a combination thereof. The Sn-based negative electrode active material may be or include at least one of Sn, $SnO_2$, a Sn-based alloy, and a combination thereof.
The silicon-carbon composite may be or include a composite of silicon and amorphous carbon. According to an example embodiment, the silicon-carbon composite may be in the form of silicon particles and amorphous carbon coated on the surface of the silicon particles. For example, the silicon-carbon composite may include a secondary particle (core) in which silicon primary particles are assembled, and an amorphous carbon coating layer (shell) on the surface of the secondary particle. The amorphous carbon may also be present between the silicon primary particles, for example, the silicon primary particles may be coated with amorphous carbon. The secondary particles may be dispersed in an amorphous carbon matrix.
The silicon-carbon composite may further include crystalline carbon. For example, the silicon-carbon composite may include a core including crystalline carbon and silicon particles, and an amorphous carbon coating layer on the surface of the core.
The Si-based negative electrode active material or Sn-based negative electrode active material may be mixed with the carbon-based negative electrode active material.

Negative Electrode

A negative electrode for a rechargeable lithium battery includes a current collector and a negative electrode active material layer on the current collector. The negative electrode active material layer includes a negative electrode active material and may further include a binder and/or a conductive material. The binder may be or include a binder of the aforementioned example embodiment.

For example, the negative electrode active material layer may include ≥ 90 wt% to ≤ 99 wt%, or ≥ 90 wt% to ≤ 99.5 wt% of the negative electrode active material, ≥ 0.5 wt% to ≤ 5 wt% of the binder, and ≥ 0.5 wt% to ≤ 5 wt% of the conductive material.

The binder is configured to adhere the negative electrode active material particles to each other, and also to adhere the negative electrode active material to the current collector. The binder may be or include a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, and a combination thereof.

The aqueous binder may include at least one of styrene-butadiene rubber, a (meth)acrylated styrene-butadiene rubber, a (meth)acrylonitrile-butadiene rubber, a (meth)acrylic rubber, butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

When an aqueous binder is included as the negative electrode binder, a cellulose-based compound capable of imparting viscosity may be further included. As the cellulose-based compound, one or more of carboxymethyl cellulose, hydroxypropylmethyl cellulose, methyl cellulose, and alkali metal salts thereof may be mixed and used. The alkali metal may be or include at least one of Na, K, and Li.

The dry binder may be or include a polymer material capable of becoming fiber, and may be or include, for example, at least one of polytetrafluoroethylene, polyvinylidene fluoride, a polyvinylidene fluoride-hexafluoropropylene copolymer, polyethylene oxide, and a combination thereof.

The conductive material is included to provide electrode conductivity and any electrically conductive material may be included as a conductive material unless the conductive material causes a chemical change in or to the battery. Examples of the conductive material include a carbon-based material such as or including at least one of natural graphite, artificial graphite, carbon black, acetylene black, ketjen black, a carbon fiber, a carbon nanofiber, a carbon nanotube, and the like; a metal-based material of a metal powder or a metal fiber including at least one of copper, nickel, aluminum silver, and the like; a conductive polymer such as a polyphenylene derivative; or a mixture thereof.

The negative electrode current collector may include at least one of a copper foil, a nickel foil, a stainless steel foil, a titanium foil, a nickel foam, a copper foam, a polymer substrate coated with a conductive metal, and a combination thereof.

Positive Electrode Active Material

The positive electrode active material may be or include a compound (lithiated intercalation compound) capable of intercalating and deintercalating lithium. Specifically, one or more types of composite oxides of lithium and a metal, such as or including at least one of cobalt, manganese, nickel, and combinations thereof, may be used.

The composite oxide may be or include a lithium transition metal composite oxide, and examples may include at least one of a lithium nickel-based oxide, a lithium cobalt-based oxide, a lithium manganese-based oxide, a lithium iron phosphate-based compound, a cobalt-free lithium nickel-manganese-based oxide, and a combination thereof.

As an example, a compound represented by any of the following chemical formulas may be used. $Li_aA_{1-b}X_bO_{2-c}D_c$ ($0.90 \leq a \leq 1.8$, $0 \leq b \leq 0.5$, $0 \leq c \leq 0.05$); $Li_aMn_{2-b}X_bO_{4-c}D_c$ ($0.90 \leq a \leq 1.8$, $0 \leq b \leq 0.5$, $0 \leq c \leq 0.05$); $Li_aNi_{1-b-c}Co_bX_cO_{2-\alpha}D_\alpha$ ($0.90 \leq a \leq 1.8$, $0 \leq b \leq 0.5$, $0 \leq c \leq 0.5$, $0 < \alpha < 2$); $Li_aNi_{1-b-c}Mn_bX_cO_{2-\alpha}D_\alpha$ ($0.90 \leq a \leq 1.8$, $0 \leq b \leq 0.5$, $0 \leq c \leq 0.5$, $0 < \alpha < 2$); $Li_aNi_bCo_cL^1_{d-e}G_eO_2$ ($0.90 \leq a \leq 1.8$, $0 \leq b \leq 0.9$, $0 \leq c \leq 0.5$, $0 \leq d \leq 0.5$, $0 \leq e \leq 0.1$); $Li_aNiG_bO_2$ ($0.90 \leq a \leq 1.8$, $0.001 \leq b \leq 0.1$); $Li_aCoG_bO_2$ ($0.90 \leq a \leq 1.8$, $0.001 \leq b \leq 0.1$); $Li_aMn_{1-b}G_bO_2$ ($0.90 \leq a \leq 1.8$, $0.001 \leq b \leq 0.1$); $Li_aMn_2G_bO_4$ ($0.90 \leq a \leq 1.8$, $0.001 \leq b \leq 0.1$); $Li_aMn_{1-g}G_gPO_4$ ($0.90 \leq a \leq 1.8$, $0 \leq g \leq 0.5$); $Li_{(3-f)}Fe_2(PO_4)_3$ ($0 \leq f \leq 2$); and $Li_aFePO_4$ ($0.90 \leq a \leq 1.8$).

In the above chemical formulas, A is or includes at least one of Ni, Co, Mn, and a combination thereof; X is or includes at least one of Al, Ni, Co, Mn, Cr, Fe, Mg, Sr, V, a rare earth element, and a combination thereof; D is or includes at least one of O, F, S, P, and a combination thereof; G is or includes at least one of Al, Cr, Mn, Fe, Mg, La, Ce, Sr, V, and a combination thereof; and $L^1$ is or includes at least one of Mn, Al, and a combination thereof.

The positive electrode active material may be or include, for example, at least one of a lithium nickel-based oxide represented by Chemical Formula 11, a lithium cobalt-based oxide represented by Chemical Formula 12, a lithium iron phosphate-based compound represented by Chemical Formula 13, a cobalt-free lithium nickel-manganese-based oxide

represented by Chemical Formula 14, and a combination thereof.

Chemical Formula 11: $Li_{a1}Ni_{x1}M^1_{y1}M^2_{z1}O_{2-b1}X_{b1}$

In Chemical Formula 11, 0.9≤a1≤1.8, 0.3≤x1≤1, 0≤y1 ≤0.7, 0≤z1≤0.7, 0.9≤x1+y1+z1≤1.1, and 0≤b1≤0.1, $M^1$ and $M^2$ each independently are or include one or more of Al, B, Ba, Ca, Ce, Co, Cr, Cu, Fe, Mg, Mn, Mo, Nb, Si, Sn, Sr, Ti, V, W, and Zr, and X is or includes one or more of F, P, and S.

In Chemical Formula 11, 0.6≤x1≤1, 0≤y1≤0.4, and 0≤z1≤0.4, or 0.8≤x1≤1, 0≤y1≤0.2, and 0≤z1≤0.2.

Chemical Formula 12: $Li_{a2}CO_{x2}M^3_{y2}O_{2-b2}X_{b2}$

In Chemical Formula 12, 0.9≤a2≤1.8, 0.7≤x2≤1, 0≤y2≤0.3, 0.9≤x2+y2≤1.1, and 0≤b2≤0.1, $M^3$ is or includes one or more of Al, B, Ba, Ca, Ce, Cr, Cu, Fe, Mg, Mn, Mo, Ni, Se, Si, Sn, Sr, Ti, V, W, Y, Zn, and Zr, and X is or includes one or more of F, P, and S.

Chemical Formula 13: $Li_{a3}Fe_{x3}M^4_{y3}PO_{4-b3}X_{b3}$

In Chemical Formula 13, 0.9≤a3≤1.8, 0.6≤x3≤1, 0≤y3≤0.4, and 0≤b3≤0.1, $M^4$ is or includes one or more of Al, B, Ba, Ca, Ce, Co, Cr, Cu, Mg, Mn, Mo, Ni, Se, Si, Sn, Sr, Ti, V, W, Y, Zn, and Zr, and X is or includes one or more of F, P, and S.

Chemical Formula 14: $Li_{a4}Ni_{x4}Mn_{y4}M^5_{z4}O_{2-b4}X_{b4}$

In Chemical Formula 14, 0.9≤a4≤1.8, 0.8≤x4<1, 0<y4≤0.2, 0≤z4≤0.2, 0.9≤x4+y4+z4≤1.1, and 0≤b4≤0.1, $M^5$ is or includes one or more of Al, B, Ba, Ca, Ce, Cr, Fe, Mg, Mo, Nb, Si, Sn, Sr, Ti, V, W, and Zr, and X is or includes one or more of F, P, and S.

For example, the positive electrode active material may be or include a high-nickel positive electrode active material in which the nickel content is greater than or equal to ≤ 80 mol%, greater than or equal to ≤ 85 mol%, greater than or equal to ≤ 90 mol%, greater than or equal to ≤ 91 %, or greater than or equal to ≤ 94 mol% and less than or equal to ≤ 99 mol%, based on 100 mol% of metal excluding lithium in the lithium transition metal composite oxide. The high-nickel positive electrode active material can achieve high capacity and can be applied to, e.g., high-capacity, high-density rechargeable lithium batteries.

Positive Electrode

The positive electrode for a rechargeable lithium battery may include a current collector, and a positive electrode active material layer on the current collector. The positive electrode active material layer may include a positive electrode active material, and may further include a binder and/or a conductive material. The binder may be or include a binder of the aforementioned example embodiment.

For example, the positive electrode may further include an additive that can constitute a sacrificial positive electrode.

A content of the positive electrode active material may be in a range of ≥ 90 wt% to ≤ 99.5 wt%, or ≥ 90 wt% to ≤ 99.5 wt% based on 100 wt% of the positive electrode active material layer, and each content of the binder and the conductive material may be in a range of ≥ 0.5 wt% to ≤ 5 wt% based on 100 wt% of the positive electrode active material layer.

The binder improves binding properties of positive electrode active material particles with one another and with a current collector. Examples of binders may include at least one of polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth) acrylic resin, a polyester resin, and nylon, but are not limited thereto.

The conductive material is included to provide electrode conductivity and any electrically conductive material may be included as a conductive material unless the electrically conductive material causes a chemical change in or to the battery. Examples of the conductive material may include a carbon-based material such as or including at least one of natural graphite, artificial graphite, carbon black, acetylene black, ketjen black, a carbon fiber, a carbon nanofiber, a carbon nanotube, and the like; a metal-based material of a metal powder or a metal fiber including at least one of copper, nickel, aluminum, silver, and the like; a conductive polymer such as a polyphenylene derivative; or a mixture thereof.

The current collector may include Al, but is not limited thereto.

Electrolyte Solution

The electrolyte may be or include a solid electrolyte or a liquid electrolyte (i.e., an electrolyte solution).

An electrolyte solution for a rechargeable lithium battery includes a non-aqueous organic solvent and a lithium salt.

The non-aqueous organic solvent may constitute a medium for transmitting ions taking part in the electrochemical reaction of a battery.

The non-aqueous organic solvent may be or include at least one of a carbonate-based, ester-based, ether-based, ketone-based, alcohol-based solvent, an aprotic solvent, and a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include at least one of methyl acetate, ethyl acetate, n-propyl acetate, dimethyl acetate, methyl propionate, ethyl propionate, decanolide, mevalonolactone, valerolactone, caprolactone, and the like. The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include at least one of ethanol, isopropyl alcohol, and the like and the aprotic solvent may include at least one of nitriles such as R-CN (wherein R is a C2 to C20 linear, branched, or cyclic hydrocarbon group, a double bond, an aromatic ring, or an ether group, and the like; amides such as dimethylformamide; dioxolanes such as 1,3-dioxolane, 1,4-dioxolane, and the like; sulfolanes, and the like.

The non-aqueous organic solvent may be included alone or may include a mixture of two or more types of solvents.

In addition, when using a carbonate-based solvent, a cyclic carbonate and a chain carbonate may be mixed, and the cyclic carbonate and the chain carbonate may be mixed in a volume ratio in a range of $\geq$ 1:1 to $\leq$ 1:9.

The lithium salt dissolved in the organic solvent is configured to supply lithium ions in a battery, to enable a basic operation of a rechargeable lithium battery, and to improve transportation of the lithium ions between positive and negative electrodes. Examples of the lithium salt may include at least one of $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (wherein x and y are integers of 1 to 20), lithium trifluoromethane sulfonate, lithium tetrafluoroethane sulfonate, lithium difluorobis(oxalato) phosphate (LiDFBOP), and lithium bis(oxalato) borate (LiBOB).

Separator

Depending on the type of the rechargeable lithium battery, a separator may be present between the positive electrode and the negative electrode. The separator may include at least one of polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or a combination thereof on one or both surfaces of the porous substrate.

The porous substrate may be or include a polymer film formed of or including any one polymer such as or including at least one of polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene(TEFLON), or a copolymer or mixture of two or more thereof.

The organic material may include a polyvinylidene fluoride-based polymer or a (meth)acrylic polymer.

The inorganic material may include inorganic particles such as or including at least one of $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and a combination thereof, but is not limited thereto.

The organic material and the inorganic material may be mixed in one coating layer, or a coating layer including an organic material and a coating layer including an inorganic material may be stacked together.

Rechargeable Lithium Battery

The rechargeable lithium battery may be classified into cylindrical, prismatic, pouch, or coin-type batteries, and the like depending on a shape thereof. FIGS. 1 to 4 are schematic views illustrating the rechargeable lithium battery according to some example embodiments, where FIG. 1 is a cylindrical battery, FIG. 2 is a prismatic battery, and FIGS. 3

and 4 are a pouch-shaped battery. Referring to FIGS. 1 to 4, the rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte solution (not shown). The rechargeable lithium battery 100 may include a sealing member 60 that seals the case 50, as shown in FIG. 1. For example, in FIG. 2, the rechargeable lithium battery 100 may include a positive electrode lead tab 11, a positive electrode terminal 12, a negative lead tab 21, and a negative electrode terminal 22. As shown in FIGS. 3 and 4, the rechargeable lithium battery 100 includes an electrode tab 70 illustrated in FIG. 4, or a positive electrode tab 71 and a negative electrode tab 72 illustrated in FIG. 3, the electrode tabs 70/71/72 forming an electrical path for inducing the current formed in the electrode assembly 40 to the outside of the battery 100.

The rechargeable lithium battery according to some example embodiments may be applicable to, e.g., automobiles, mobile phones, and/or various types of electrical devices, but the present disclosure is not limited thereto.

Examples and comparative examples of the present disclosure are described below. However, the following examples are only examples of the present disclosure, and the present disclosure is not limited to the following examples.

## Examples and Comparative Examples

### Preparation Example 1: Preparation of Core-shell Structured Particle-shaped Binder

A first monomer mixture including 50 wt% of 2-ethylhexylacrylate (2-EHA), 49.5 wt% of styrene (ST), and 0.5 wt% of bis-(ethylene glycol) diacrylate(PEGDA) was prepared, and an azo compound initiator and water were added thereto. The azo compound initiator was included in an amount of 0.2 parts by weight based on 100 parts by weight of the first monomer mixture.

Subsequently, the obtained mixture was subjected to emulsion polymerization to obtain a solution including a core including a first structural unit derived from 2-ethylhexylacrylate, a second structural unit derived from styrene, and a third structural unit derived from bis-(ethylene glycol) diacrylate.

On the other hand, a second monomer mixture including 35 wt% of acrylic acid (AA), 35 wt% of acrylonitrile (AN), and 30 wt% of sodium styrene sulfonate (NaSS) was prepared.

The second monomer mixture was added to the first monomer mixture in an amount of 5 parts by weight based on 100 parts by weight of the core (i.e., the first monomer mixture) in the solution including the core, and subsequently mixed with an azo compound initiator and water. The azo compound initiator was included in an amount of 0.2 parts by weight based on 100 parts by weight of the second monomer mixture. As a result, a solution including a core-shell structured particle-shaped binder was obtained.

The core-shell structured particle-shaped binder was measured with respect to an average particle diameter (D50), which was measured under the condition of number-average particle size distribution by using a dynamic light scattering device, wherein the average particle diameter (D50) was 1,120 nm, and a weight average molecular weight of the core-shell structured particle-shaped binder, which was calculated in polystyrene equivalent by gel permeation chromatography, was 950,000 g/mol.

### Preparation Example 2-1: Preparation of Linear Binder

100 parts by weight of a third monomer mixture including 50 wt% of acrylic acid (AA), 40 wt% of acrylonitrile (AN), and 10 wt% of sulfobetaine (SB) was mixed with an azo compound initiator and water. The azo compound initiator was included in an amount of 0.2 parts by weight based on 100 parts by weight of the third monomer mixture.

Subsequently, the obtained mixture was subjected to emulsion polymerization to prepare a solution including a linear binder including a copolymer including a seventh structural unit derived from acrylic acid, an eighth structural unit derived from acrylonitrile, and a ninth structural unit derived from sulfobetaine.

The linear binder had a weight average molecular weight of 720,500 g/mol, which was calculated in polystyrene equivalent by gel permeation chromatography.

### Preparation Example 2-2: Preparation of Linear Binder

A solution including a linear binder was prepared in the same manner as in Preparation Example 2-1, with a difference that the third monomer mixture was prepared by mixing 49 wt% of acrylic acid (AA), 36 wt% of acrylonitrile (AN), and 15 wt% of sulfobetaine (SB).

The linear binder had a weight average molecular weight of 901,000 g/mol, which was calculated in polystyrene equivalent by gel permeation chromatography.

### Preparation Example 2-3: Preparation of Linear Binder

A solution including a linear binder was prepared in the same manner as in Preparation Example 2-1, with a difference that vinylimidazolium sulfonate (IMS) was included instead of the sulfobetaine (SB).
The linear binder had a weight average molecular weight of 754,000 g/mol, which was calculated in polystyrene equivalent by gel permeation chromatography.

### Preparation Example 2-4: Preparation of Linear Binder

A solution including a linear binder was prepared in the same manner as in Preparation Example 2-1, with a difference that the third monomer mixture was prepared by mixing 51 wt% of acrylic acid (AA), 39 wt% of acrylonitrile (AN), 5 wt% of sulfobetaine (SB), and 5 wt% of alkylene glycol (ethylene glycol repeating number (n) = 8).
Accordingly, the solution including the linear binder including a copolymer including a seventh structural unit derived from acrylic acid, an eighth a structural unit derived from acrylonitrile, a ninth structural unit derived from sulfobetaine, and a tenth structural unit derived from ethylene glycol (ethylene glycol repeating number (n) = 8) was prepared.
The linear binder had a weight average molecular weight of 963,000 g/mol, which was calculated in polystyrene equivalent by gel permeation chromatography.

### Preparation Example 2-5: Preparation of Linear Binder

A solution including a linear binder was prepared in the same manner as in Preparation Example 2-1, with a difference that the third monomer mixture was prepared by mixing 49 wt% of acrylic acid (AA), 41 wt% of acrylonitrile (AN), 7 wt% of sulfobetaine (SB), and 3 wt% of alkylene glycol (ethylene glycol repeating number (n) = 8).
Accordingly, the solution including the linear binder including a copolymer including a seventh structural unit derived from acrylic acid, an eighth a structural unit derived from acrylonitrile, a ninth structural unit derived from sulfobetaine, and a tenth structural unit derived from ethylene glycol (ethylene glycol repeating number (n) = 8) was prepared.
The linear binder had a weight average molecular weight of 940,500 g/mol, which was calculated in polystyrene equivalent by gel permeation chromatography.

### Example 1

(1) Preparation of Binder

1.5 parts by weight of the core-shell particle-shaped binder of Preparation Example 1, and 1 part by weight of the linear binder of Preparation Example 2-1 were mixed.

(2) Manufacturing of Negative Electrode

97.5 wt% of a graphite negative electrode active material and 2.5 wt% of the binder were mixed in a water solvent to prepare a negative electrode active material layer slurry. The negative electrode active material layer slurry was coated on a copper foil current collector, dried, and compressed, manufacturing a negative electrode.

(3) Manufacturing of Positive Electrode

97.7 wt% of a $LiNi_{0.88}Co_{0.105}Al_{0.015}O_2$ positive electrode active material, 1.3 wt% of a polyvinylidene fluoride binder, and 1.0 wt% of a carbon nanotube conductive material were mixed to prepare a positive electrode active material layer slurry, which was coated on ah aluminum foil current collector and then, dried and compressed to manufacture a positive electrode.

(4) Preparation of Electrolyte Solution

An electrolyte solution was prepared by mixing ethylene carbonate (EC), ethylmethyl carbonate (EMC), and dimethyl carbonate (DMC) in a volume ratio of 2:4:4 to prepare an organic solvent and then, dissolving $LiPF_6$ lithium salt at a concentration of 1.15 M in the organic solvent.

(5) Manufacturing of Rechargeable Lithium Battery Cell

The positive and negative electrodes were assembled with a 14 μm-thick polyethylene separation membrane to manufacture an electrode assembly, the electrode assembly was housed in a prismatic case, and the electrolyte solution was injected thereinto, manufacture a rechargeable lithium battery cell.

**Example 2**

(1) Preparation of Binder

1.5 parts by weight of the core-shell particle-shaped binder of Preparation Example 1, and 0.5 parts by weight of the linear binder of Preparation Example 2-1 were mixed to prepare a binder.

(2) Manufacturing of Negative Electrode

97.5 wt% of a graphite negative electrode active material, 2 wt% of the binder, and 0.5 wt% of carboxy methyl cellulose (CMC) as a thickener were mixed in a water solvent to prepare a negative electrode active material layer slurry. The negative electrode active material layer slurry was coated on a copper foil current collector, dried, and compressed, manufacturing a negative electrode.

(3) Manufacturing of Rechargeable Lithium Battery Cell

A rechargeable lithium battery cell was manufactured in the same manner as in Example 1, with a difference that the negative electrode was used.

**Example 3**

(1) Preparation of Binder

1.5 parts by weight of the core-shell particle-shaped binder of Preparation Example 1, and 0.2 parts by weight of the linear binder of Preparation Example 2-1 were mixed to prepare a binder.

(2) Manufacturing of Negative Electrode

97.5 wt% of a graphite negative electrode active material, 1.7 wt% of the binder, and 0.8 wt% of carboxy methyl cellulose (CMC) as a thickener were mixed in a water solvent to prepare a negative electrode active material layer slurry. The negative electrode active material layer slurry was coated on a copper foil current collector, dried, and compressed, manufacturing a negative electrode.

(3) Manufacturing of Rechargeable Lithium Battery Cell

A rechargeable lithium battery cell was manufactured in the same manner as in Example 1, with a difference that the negative electrode was used.

**Example 4**

A negative electrode and a rechargeable lithium battery cell were manufactured in the same manner as in Example 1, with a difference that the linear binder of Preparation Example 2-2 was used instead of the linear binder of Preparation Example 2-1.

**Example 5**

A negative electrode and a rechargeable lithium battery cell were manufactured in the same manner as in Example 1, with a difference that the linear binder of Preparation Example 2-3 was used instead of the linear binder of Preparation Example 2-1.

**Example 6**

A negative electrode and a rechargeable lithium battery cell were manufactured in the same manner as in Example 1, with a difference that the linear binder of Preparation Example 2-4 was used instead of the linear binder of Preparation Example 2-1.

**Example 7**

A negative electrode and a rechargeable lithium battery cell were manufactured in the same manner as in Example 1, with a difference that the linear binder of Preparation Example 2-5 was used instead of the linear binder of Preparation Example 2-1.

**Comparative Example 1**

(1) Binder

SBR (Styrene) as a binder was used.

(2) Manufacturing of Negative Electrode

97.5 wt% of a graphite negative electrode active material, 1.5 wt% of the binder, and 1 wt% of carboxy methyl cellulose (CMC) as a thickener were mixed in a water solvent to prepare a negative electrode active material layer slurry. The negative electrode active material layer slurry was coated on a copper foil current collector, dried, and compressed, manufacturing a negative electrode.

(3) Manufacturing of Rechargeable Lithium Battery Cell

A rechargeable lithium battery cell was manufactured in the same manner as in Example 1, with a difference that the negative electrode was used.

**Comparative Example 2**

(1) Binder

The core-shell particle-shaped binder of Preparation Example 1 was used as a binder.

(2) Manufacturing of Negative Electrode

97.5 wt% of a graphite negative electrode active material, 1.5 wt% of the binder, and 1 wt% of carboxy methyl cellulose (CMC) as a thickener were used in a water solvent to prepare a negative electrode active material layer slurry. The negative electrode active material layer slurry was coated on a copper foil current collector, dried, and compressed, manufacturing a negative electrode.

(3) Manufacturing of Rechargeable Lithium Battery Cell

A rechargeable lithium battery cell was manufactured in the same manner as in Example 1, with a difference that the negative electrode was used.

**Comparative Example 3**

(1) Binder

The core-shell particle-shaped binder of Preparation Example 1 as a binder was used.

(2) Manufacturing of Negative Electrode

97.5 wt% of a graphite negative electrode active material, 1.5 wt% of the binder, and 1 wt% of polyacrylic acid (PAA) were mixed in a water solvent to prepare a negative electrode active material layer slurry. The negative electrode

active material layer slurry was coated on a copper foil current collector, dried, and compressed, manufacturing a negative electrode.

(3) Manufacturing of Rechargeable Lithium Battery Cell

A rechargeable lithium battery cell was manufactured in the same manner as in Example 1, with a difference that the negative electrode was used.

Table 1:

| | Core-shell particle-shaped binder (CSB) | | | | | | | Linear binder (ALB) | | | | | CSB: ALB |
|---|---|---|---|---|---|---|---|---|---|---|---|---|---|
| | core | | | shell | | | core: shell | AA | AN | SB | IM S | EG | |
| | 2-EHA | ST | PEG DA | AA | AN | Na SS | | | | | | | |
| Ex. 1 | 50 | 49.5 | 0.5 | 35 | 35 | 30 | 100:5 | 50 | 40 | 10 | - | - | 1.5:1.0 |
| Ex. 2 | 50 | 49.5 | 0.5 | 35 | 35 | 30 | 100:5 | 50 | 40 | 10 | - | - | 1.5:0.5 |
| Ex. 3 | 50 | 49.5 | 0.5 | 35 | 35 | 30 | 100:5 | 50 | 40 | 10 | - | - | 1.5:0.2 |
| Ex. 4 | 50 | 49.5 | 0.5 | 35 | 35 | 30 | 100:5 | 49 | 36 | 15 | - | - | 1.5:1.0 |
| Ex. 5 | 50 | 49.5 | 0.5 | 35 | 35 | 30 | 100:5 | 50 | 40 | - | 10 | - | 1.5:1.0 |
| Ex. 6 | 50 | 49.5 | 0.5 | 35 | 35 | 30 | 100:5 | 51 | 39 | 5 | | 5 | 1.5:1.0 |
| Ex. 7 | 50 | 49.5 | 0.5 | 35 | 35 | 30 | 100:5 | 49 | 41 | 7 | | 3 | 1.5:1.0 |
| Comp. Ex. 1 | - | - | - | - | - | - | | - | - | - | | - | 0:0 |
| Comp. Ex. 2 | 50 | 49.5 | 0.5 | 35 | 35 | 30 | 100:5 | - | - | - | | - | 1.5:0 |
| Comp. Ex.3 | 50 | 49.5 | 0.5 | 35 | 35 | 30 | 100:5 | - | - | - | | - | 1.5:0 |

The description of Table 1 is as follows.

Each content of 2-ethylhexylacrylate (2-EHA), styrene (ST), and bis-(ethylene glycol) diacrylate based on 100 wt% of the core was expressed by wt%.

Each content of acrylic acid (AA), acrylonitrile (AN), and sodium styrene sulfonate (NaSS) based on 100 wt% of the shell was expressed by wt%.

A weight ratio of the core and the shell was expressed as core:shell.

As for the linear binder, each content of acrylic acid (AA), acrylonitrile (AN), and sulfobetaine (SB) based on 100 wt% of the linear binder; or each content of acrylic acid (AA), acrylonitrile (AN), sulfobetaine (SB), and ethylene glycol based on100 wt% of the linear binder were expressed by wt%.

## Evaluation Examples

### Evaluation Example 1: Adhesive strength of negative electrode

Each of the negative electrodes of Examples 1 to 7 and Comparative Examples 1 to 3 was evaluated with respect to adhesive strength according to three criteria, and the results are shown in Table 2 below.

(1) Degree of negative electrode detachment occurrence

Each of the negative electrodes of Examples 1 to 7 and Comparative Examples 1 to 3 was measured with respect to a weight and an area of a negative electrode active material layer (a weight and an area before detachment).

Subsequently, the rechargeable lithium battery cells respectively including the negative electrodes of Examples 1 to 7 and Comparative Examples 1 to 3 were charged to SOC (State of Charge) 100% and disassembled to measure a weight and an area of each negative electrode active material layer (a weight and an area after the detachment).

Each of the negative electrodes was evaluated with respect to a degree of the detachment as an integer of 1 to 3 according to the following criteria, and the results are shown in Table 1.

1: (Weight before detachment - Weight after detachment) / Weight before detachment is 70 wt% or more, and/or (Area before detachment - Area after detachment) / Area before detachment is 70 sq% or more.

2: (Weight before detachment - Weight after detachment)/Weight before detachment is 10 wt% or more and less than 70 wt%, and/or (Area before detachment - Area after detachment)/Area before detachment is 10 sq% or more and less than 70 sq%.
3: (Weight before detachment - Weight after detachment) / Weight before detachment is less than 10 wt%, and/or (Area before detachment - Area after detachment) / Area before detachment is less than 10 sq%.

(2) Dry adhesive strength

Each of the negative electrodes of Examples 1 to 7 and Comparative Examples 1 to 3 was attached to a support with a double-sided adhesive tape and, measured with respect to a force taken to peel off a negative electrode active material layer from a current collector at a speed of 100 mm/min and an angle of 90° by using a universal testing machine, wherein the force was called to be 'dry adhesive strength.'

(3) Wet adhesive strength

Each of the negative electrodes of Examples 1 to 7 and Comparative Examples 1 to 3 was dipped in an electrolyte solution for 300 minutes at 45 °C and taken out of the electrolyte solution, attached to a support with a double-sided adhesive tape, and measured again with respect to a force taken to peel off a negative electrode active material layer form a current collector at a speed of 100 mm/min and an angle of 90° by using a universal testing machine, wherein the force was called to be 'wet adhesive strength.'
Herein, the same electrolyte as Example 1 was used as an electrolyte solution.

**Evaluation Example 2: Room-temperature Characteristics of Rechargeable Lithium Battery Cells**

Each of the negative electrodes of Examples 1 to 7 and Comparative Examples 1 to 3 was evaluated with respect to room temperature Direct Current Internal Resistance (DC-IR) and room temperature lifespan characteristics in the following three methods, and the results are shown in Table 2.

(1) DC-IR

Each of the rechargeable lithium battery cells of Examples 1 to 7 and Comparative Examples 1 to 3 was measured with respect to $\triangle V/\triangle I$ (voltage change / current change) at 25 °C, which was regarded as initial DC resistance. The results are shown in Table 2.
Each of the rechargeable lithium battery cells of Examples 1 to 7 and Comparative Examples 1 to 3 was 200 cycles charged and discharged under the condition of 0.7 C charge (CC/CV, 4.25V, 0.05 C Cut-off) /0.7 C discharge (CC, 2.8 V Cut-off) at 25 °C to calculate a capacity retention rate according to Equation 1.

Capacity retention rate %: = (discharge capacity after 200th cycle / discharge capacity after 1 cycle) * 100 Equation 1:

Table 2:

| | Negative electrode adhesive strength | | | Room-temperature characteristics of battery cells | |
|---|---|---|---|---|---|
| | Electrode plate detachment | Dry adhesive strength | Wet adhesive strength | DC-IR (Ω) | Cycle-life retention rate (%, @200 Cyc.) |
| Ex. 1 | 1 | 1.91 | 1.48 | 0.91 | 95.4 |
| Ex. 2 | 1 | 1.76 | 1.30 | 0.94 | 93.3 |
| Ex. 3 | 2 | 1.56 | 1.12 | 0.96 | 93.3 |
| Ex. 4 | 1 | 1.71 | 1.50 | 0.90 | 94.8 |
| Ex. 5 | 1 | 1.6 | 1.22 | 0.89 | 94.6 |
| Ex. 6 | 1 | 1.91 | 1.20 | 0.85 | 96.0 |
| Ex. 7 | 1 | 1.78 | 1.40 | 0.87 | 95.8 |

(continued)

| | Negative electrode adhesive strength | | | Room-temperature characteristics of battery cells | |
|---|---|---|---|---|---|
| | Electrode plate detachment | Dry adhesive strength | Wet adhesive strength | DC-IR (Ω) | Cycle-life retention rate (%, @200 Cyc.) |
| Comp. Ex. 1 | 1 | 1.5 | 1.21 | 1.24 | 94.4 |
| Comp. Ex. 2 | 3 | 1.2 | 0.84 | 0.98 | 84.0 |
| Comp. Ex. 3 | 2 | 2.12 | 1.40 | 1.12 | 87.1 |

**Summary**

Referring to Tables 1 and 2, the binder for rechargeable lithium batteries according to some example embodiments, which was represented by Examples 1 to 7, had low resistance as well as high adhesion, and thus was confirmed to contribute to improving performance of the rechargeable lithium batteries.

While this disclosure has been described in connection with what is presently considered to be practical example embodiments, it is to be understood that the disclosure is not limited to the disclosed example embodiments. On the contrary, this disclosure is intended to cover various modifications and equivalent arrangements included within the scope of the appended claims.

**Description of Symbols:**

| | | | |
|---|---|---|---|
| 100: | rechargeable lithium battery | 10: | positive electrode |
| 11: | positive electrode lead tab | 12: | positive terminal |
| 20: | negative electrode | 21: | negative electrode lead tab |
| 22: | negative terminal | 30: | separator |
| 40: | electrode assembly | 50: | case |
| 60: | sealing member | 70: | electrode tab |
| 71: | positive electrode tab | 72: | negative electrode tab |

**Claims**

**1.** A binder for a rechargeable lithium battery (100), the binder comprising a core-shell structured particle-shaped binder and a linear binder,
wherein the core-shell structured particle-shaped binder comprises:

a core including a first structural unit derived from a (C1-C20) alkyl or (C2-C20) alkenyl (meth)acrylate monomer, a second structural unit derived from an aromatic vinyl monomer, and a third structural unit derived from a di(meth) acrylate monomer; and
a shell including a fourth structural unit derived from a (meth)acrylic acid-based monomer or a salt thereof, a fifth structural unit derived from a (meth)acrylonitrile-based monomer, and a sixth structural unit derived from an aromatic vinyl sulfonate-based monomer or a salt thereof, and
the linear binder comprises:
a seventh structural unit derived from a (meth)acrylic acid-based monomer or a salt thereof, an eighth structural unit derived from a (meth)acrylonitrile-based monomer, and a ninth structural unit derived from a zwitterionic monomer.

**2.** The binder as claimed in claim 1, wherein:

the first structural unit is represented by Chemical Formula 1,
the second structural unit is represented by Chemical Formula 2, and
the third structural unit is represented by Chemical Formula 3:

Chemical Formula 1:

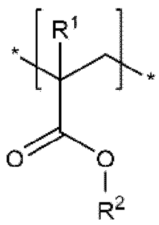

wherein, in Chemical Formula 1,
$R^1$ comprises a hydrogen atom or a C1 to C20 alkyl group; and
$R^2$ comprises a substituted or unsubstituted C1 to C20 alkyl group, or a substituted or unsubstituted C2 to C20 alkenyl group,

Chemical Formula 2:

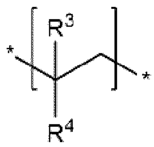

wherein, in Chemical Formula 2,
$R^3$ comprises a hydrogen atom, or a C1 to C20 alkyl group; and
$R^4$ comprises a substituted or unsubstituted C6 to C20 aryl group,

Chemical Formula 3:

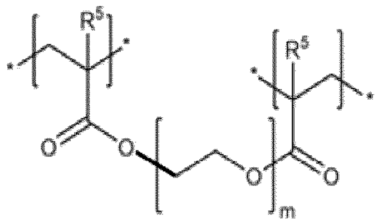

wherein, in Chemical Formula 3,
$R^5$ is the same or different and independently comprises a hydrogen atom or a C1 to C20 alkyl group; and
m is an integer in a range of 1 to 100.

3. The binder as claimed in claim 1 or 2, wherein based on 100 wt% of a total amount of the core, the first structural unit is included in an amount in a range of ≥ 35 wt% to ≤ 60 wt%, the second structural unit is included in an amount in a range of ≥ 35 wt% to ≤ 60 wt%, and the third structural unit is included in an amount in a range of ≥ 0.01 wt% to ≤ 5 wt%.

4. The binder as claimed in any of the claims 1 to 3, wherein:

the fourth structural unit is represented by Chemical Formula 4-1 or 4-2,
the fifth structural unit is represented by Chemical Formula 5, and
the sixth structural unit is represented by Chemical Formula 6-1 or 6-2:

Chemical Formula 4-1:

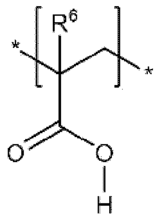

Chemical Formula 4-2:

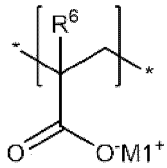

wherein, in Chemical Formulas 4-1 and 4-2,
$R^6$ is the same or different and independently comprises a hydrogen atom or a C1 to C20 alkyl group; and
M1 comprises an alkali metal,

Chemical Formula 5:

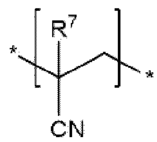

wherein, in Chemical Formula 5,
$R^7$ comprises a hydrogen atom or a C1 to C20 alkyl group,

Chemical Formula 6-1:

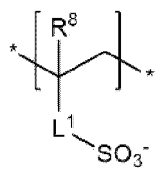

Chemical Formula 6-2:

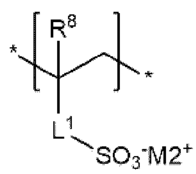

wherein, in Chemical Formulas 6-1 and 6-2,
$R^8$ is the same or different and independently comprises a hydrogen atom or a C1 to C20 alkyl group;
$L^1$ is the same or different and independently comprises a substituted or unsubstituted C6 to C20 arylene group; and
M2 comprises an alkali metal.

**5.** The binder as claimed in any of the claims 1 to 4, wherein based on 100 wt% of a total amount of the shell, the fourth structural unit is included in an amount in a range of ≥ 25 wt% to ≤ 60 wt%, the fifth structural unit is included in an amount in a range of ≥ 25 wt% to ≤ 47 wt%, and the sixth structural unit is included in an amount in a range of ≥ 3 wt% to ≤ 35 wt%.

**6.** The binder as claimed in any of the claims 1 to 5, wherein a weight ratio of the core and the shell in the core-shell structured particle-shaped binder is in a range of ≥ 100:0.1 to ≤ 100:20.

**7.** The binder as claimed in any of the claims 1 to 6, wherein an average particle diameter (D50) of the core-shell structured particle-shaped binder is in a range of ≥ 450 nm to ≤ 1500 nm measuring by laser diffraction.

**8.** The binder as claimed in claim 1, wherein:

the seventh structural unit is represented by Chemical Formula 7-1 or 7-2,
the eighth structural unit is represented by Chemical Formula 8, and
the ninth structural unit is represented by Chemical Formula 9-1 or 9-2:

Chemical Formula 7-1:

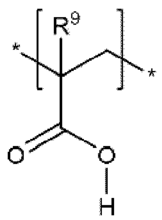

Chemical Formula 7-2:

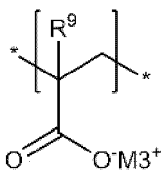

wherein, in Chemical Formulas 7-1 and 7-2,
$R^9$ is the same or different and independently comprises a hydrogen atom or a C1 to C20 alkyl group; and
M3 comprises an alkali metal,

Chemical Formula 8:

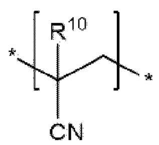

wherein, in Chemical Formula 8,
$R^{10}$ comprises a hydrogen atom or a C1 to C20 alkyl group,

Chemical Formula 9-1:

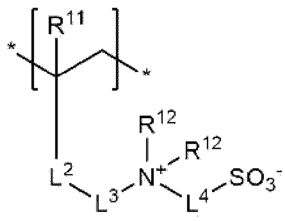

Chemical Formula 9-2:

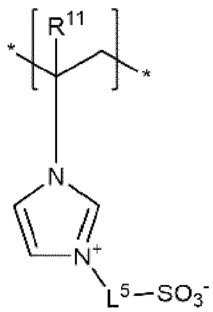

wherein, in Chemical Formulas 9-1 and 9-2,
$R^{11}$ is the same or different and independently comprises a hydrogen atom or a C1 to C20 alkyl group;
$R^{12}$ is the same or different and independently comprises a hydrogen atom or a C1 to C20 alkyl group;
$L^2$ comprises *-(C=O)-$NR^{12}$-$CH_2$-* or *-(C=O)-O-*; and
$L^3$ to $L^5$ each independently comprises a single bond or a C1 to C20 alkylene group.

**9.** The binder as claimed in any of the claims 1 to 8, wherein the seventh structural unit is included in an amount in a range of ≥ 30 wt% to ≤ 60 wt%, the eighth structural unit is included in an amount in a range of ≥ 32 wt% to ≤ 55 wt%, and the ninth structural unit is included in an amount in a range of ≥ 1 wt% to ≤ 15 wt%, based on 100 wt% of a total amount of the linear binder.

**10.** The binder as claimed in any of the claims 1 to 9, wherein the linear binder further includes a tenth structural unit derived from a (C1-C10) alkylene glycol-based monomer or a salt thereof.

**11.** The binder as claimed in any of the claims 1 to 10, wherein the tenth structural unit is represented by Chemical Formula 10-1 or 10-2:

Chemical Formula 10-1:

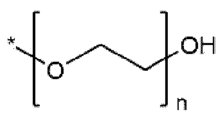

Chemical Formula 10-2:

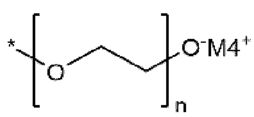

wherein, in Chemical Formulas 10-1 and 10-2,
M4 comprises an alkali metal, and
n is an integer in a range of 1 to 100.

**12.** The binder as claimed in any of the claims 1 to 11, wherein based on 100 wt% of a total amount of the linear binder, the tenth structural unit is included in an amount in a range of ≥ 0.1 wt% to ≤ 15 wt%.

**13.** The binder as claimed in any of the claims 1 to 12, wherein a weight ratio of the core-shell structured particle-shaped binder to the linear binder is in a range of ≥ 100:1 to ≤ 1:1.

**14.** An electrode for a rechargeable lithium battery (100), the electrode comprising:

the binder as claimed in any of the claims 1 to 13; and
an electrode active material;
whereby preferably the electrode is a negative electrode (20).

**15.** A rechargeable lithium battery (100), comprising:

the negative electrode (20) as claimed in claim 14;
a positive electrode (10); and
an electrolyte.

FIG. 1

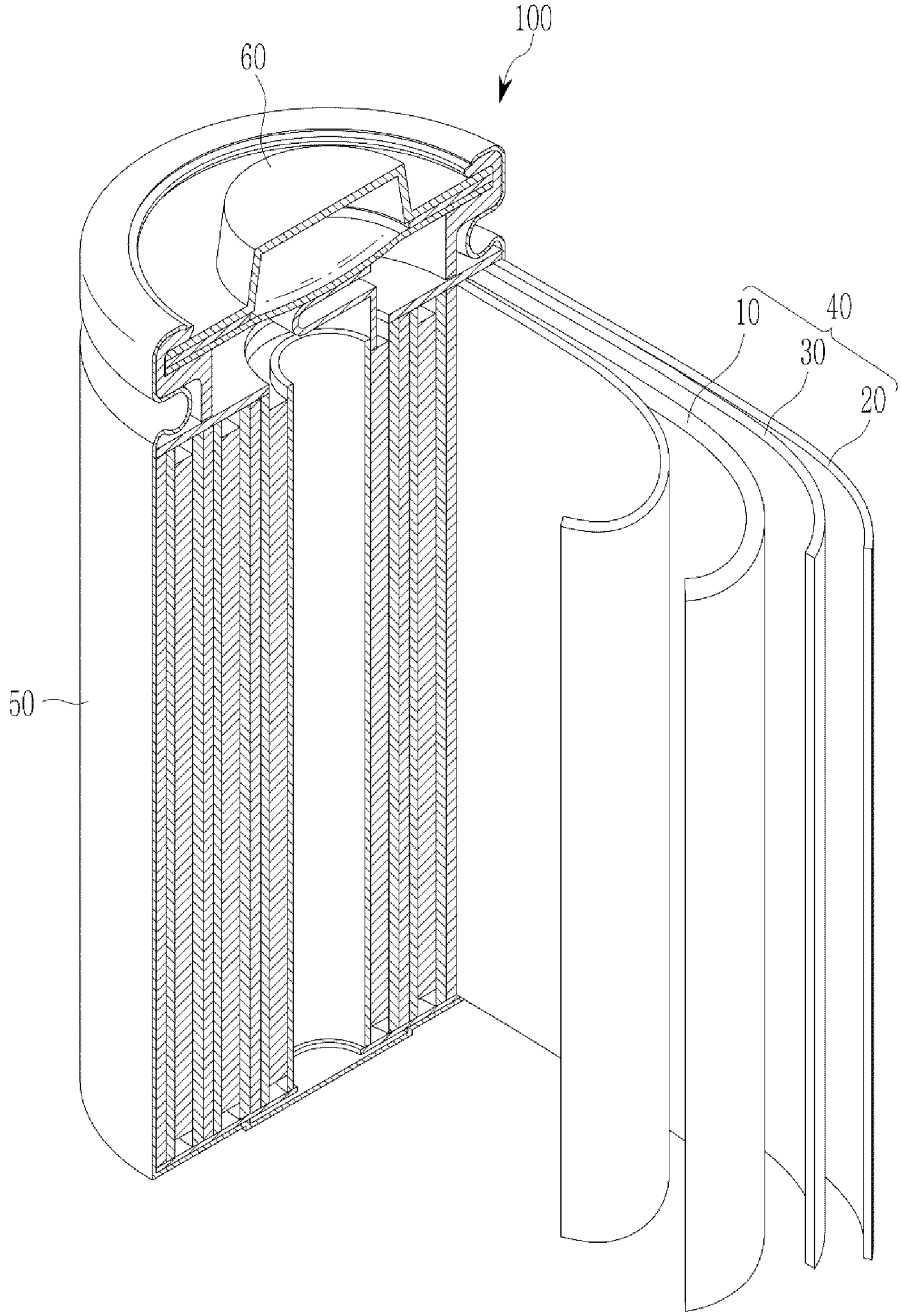

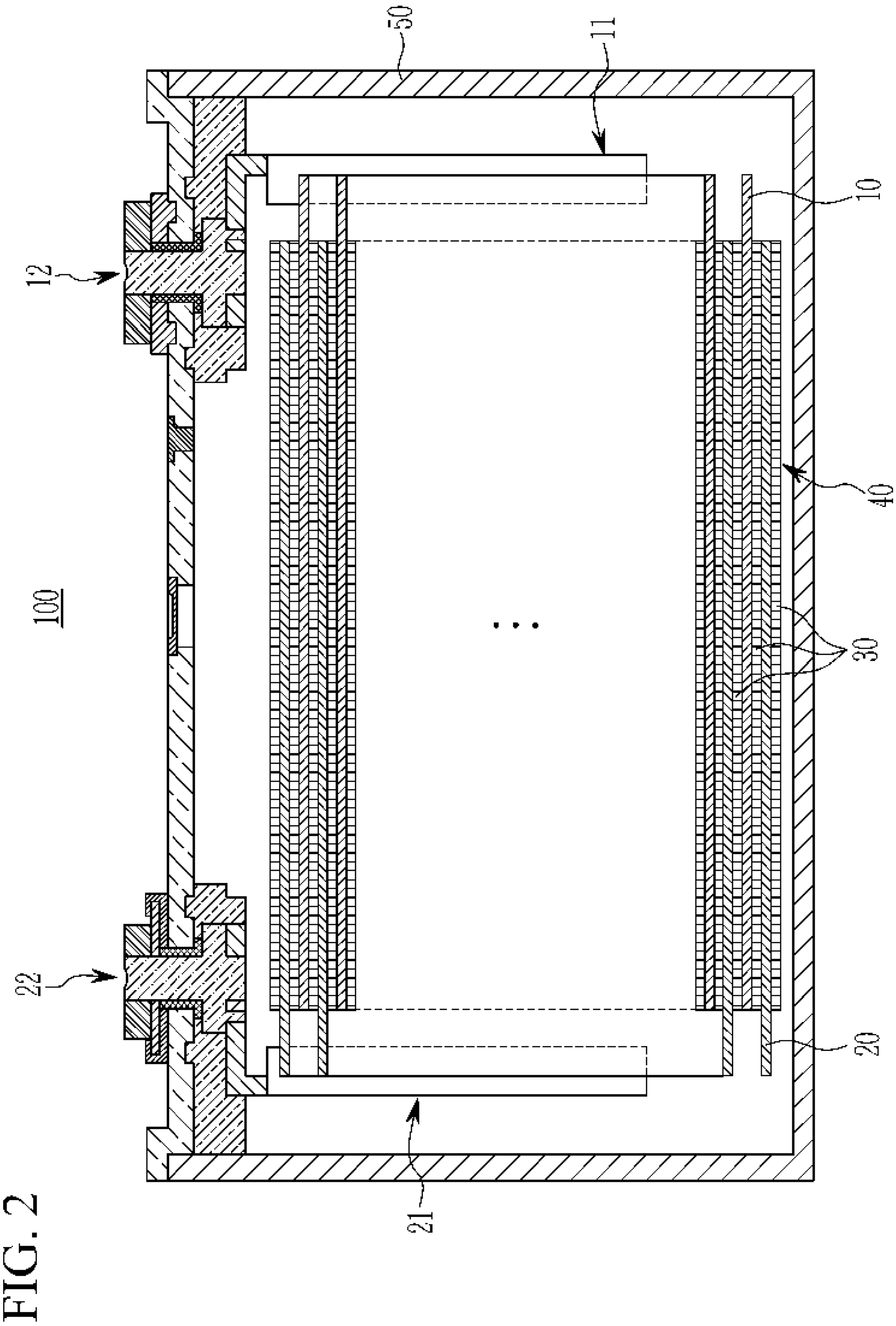


FIG. 2

FIG. 3

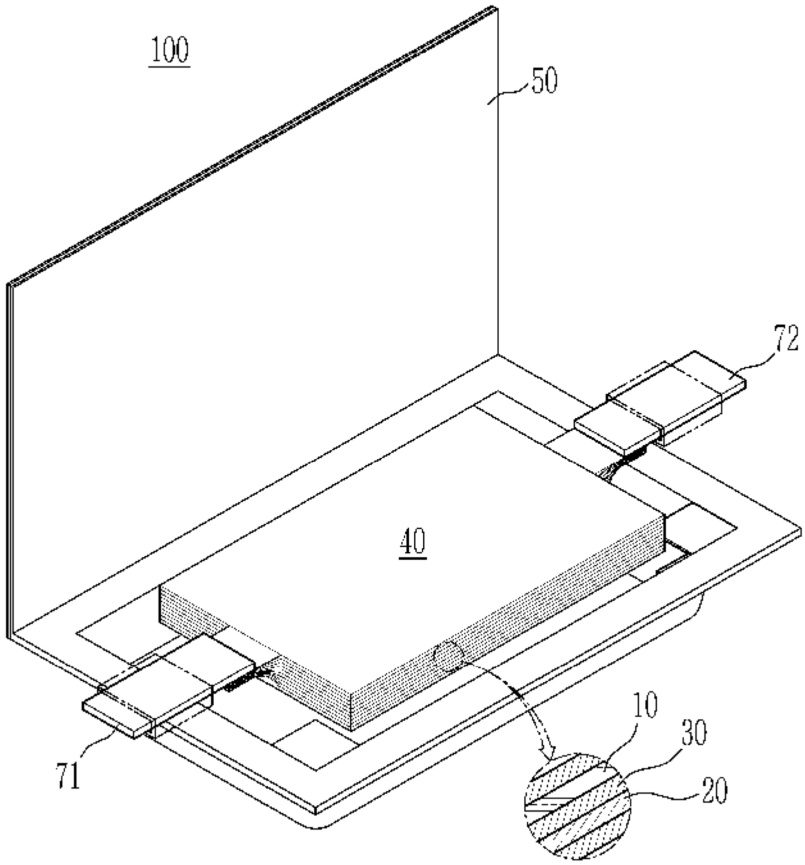

FIG. 4

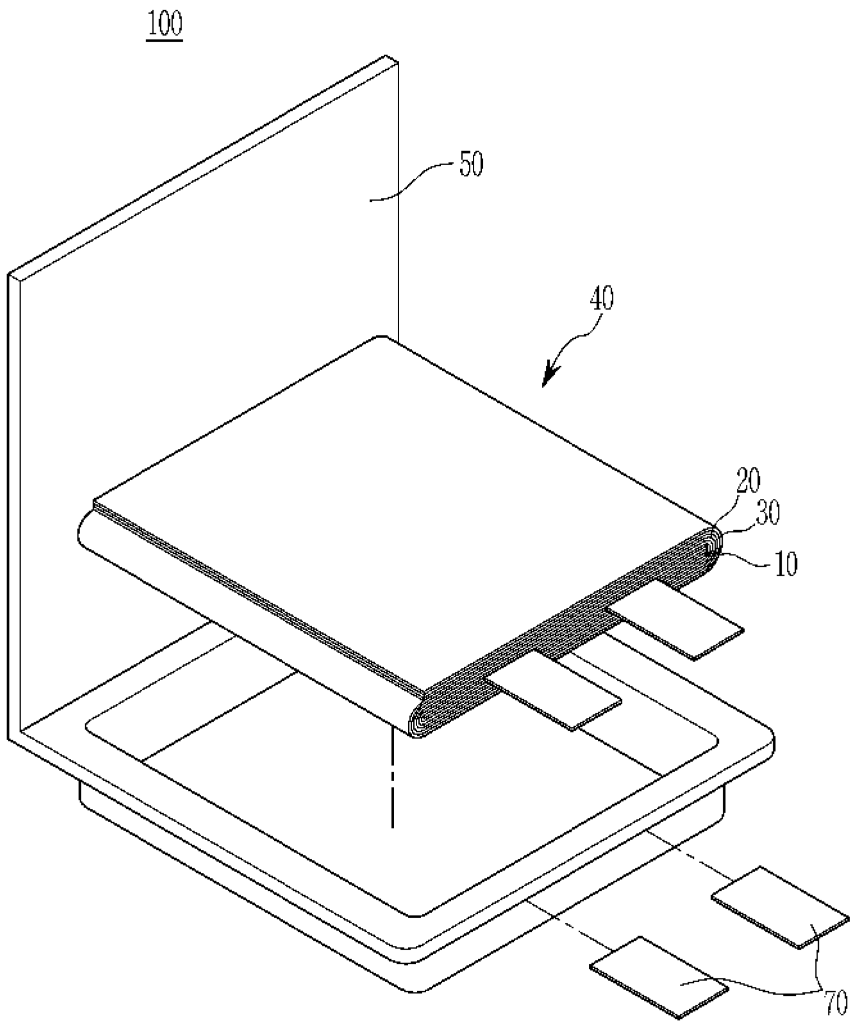

Europäisches Patentamt
European Patent Office
Office européen des brevets

# EUROPEAN SEARCH REPORT

Application Number
EP 25 19 7631

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 3 734 697 A1 (ZEON CORP [JP]) 4 November 2020 (2020-11-04) * paragraphs [0142] - [0150], [0162]; example 10; table 1 * ----- | 1-15 | INV. H01M4/62 C08F220/06 C08F220/14 C08F220/44 C08F212/08 |
| A | CN 117 645 851 A (SHENZHEN YULIAN NEW MATERIAL TECH CO LTD) 5 March 2024 (2024-03-05) * paragraphs [0014] - [0015], [0060]; claims 1-10 * ----- | 1-15 | |
| A | CN 113 555 558 B (ZHUHAI COSMX BATTERY CO LTD) 20 December 2022 (2022-12-20) * paragraphs [0091] - [0097]; claims 1-11; example 1 * ----- | 1-15 | |

TECHNICAL FIELDS SEARCHED (IPC)

H01M
C08F
C09J

The present search report has been drawn up for all claims

1

| Place of search | Date of completion of the search | Examiner |
|---|---|---|
| The Hague | 12 January 2026 | Ramos Alonso, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO.

EP 25 19 7631

This annex lists the patent family members relating to the patent documents cited in the above-mentioned European search report. The members are as contained in the European Patent Office EDP file on
The European Patent Office is in no way liable for these particulars which are merely given for the purpose of information.

12-01-2026

| Patent document cited in search report | | Publication date | Patent family member(s) | | Publication date |
|---|---|---|---|---|---|
| EP 3734697 | A1 | 04-11-2020 | CN 111492505 | A | 04-08-2020 |
| | | | EP 3734697 | A1 | 04-11-2020 |
| | | | JP 7306271 | B2 | 11-07-2023 |
| | | | JP WO2019131347 | A1 | 10-12-2020 |
| | | | KR 20200102994 | A | 01-09-2020 |
| | | | US 2021075017 | A1 | 11-03-2021 |
| | | | WO 2019131347 | A1 | 04-07-2019 |
| CN 117645851 | A | 05-03-2024 | NONE | | |
| CN 113555558 | B | 20-12-2022 | NONE | | |

EPO FORM P0459

For more details about this annex : see Official Journal of the European Patent Office, No. 12/82